# EUROPÄISCHE PATENTSCHRIFT

(11) **EP 1 609 681 B1**
(45) Veröffentlichungstag und Bekanntmachung des Hinweises auf die Patenterteilung: **11.07.2007**
(21) Anmeldenummer: 05008698.2
(22) Anmeldetag: 21.04.2005
(51) Int. Cl.: B60R 13/08

(54) **Isolierende Struktur für Kraftfahrzeug**
Insulating structure for vehicle
Structure isolante pour véhicule

(30) Priorität: 24.06.2004 DE 102004030621
(43) Veröffentlichungstag der Anmeldung: 28.12.2005
(73) Patentinhaber: ElringKlinger AG, 72581 Dettingen/Erms (DE)
(72) Erfinder: Hofmann, Dieter, 91452 Wilhermsdorf (DE); Lang, Markus, 92318 Neumarkt (DE)
(74) Vertreter: Bartels & Partner

(56) Entgegenhaltungen:
- CA-A1- 2 405 334
- DE-B3- 10 247 641
- US-A- 3 948 340

## Beschreibung

Die Erfindung betrifft ein Strukturbauteil in Form eines Abschirmteils zur Schall- und/oder Wärmeisolation von Motorenkomponenten gemäß der Merkmalsausgestaltung des Oberbegriffes des Patentanspruches 1.

Während die Wärmeentwicklung beispielsweise eines sparsamen leistungsoptimierten Dieselmotors am Zylinderkurbelwellengehäuse sehr gering sein kann, gilt das für "heiße Zonen", wie bei Krümmer, Turbolader Katalysator etc. keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort, bezogen auf sonstige thermische Motorenteile (Neue Werkstoffe und Entwicktungs-Toots für den Hitzeschutz in MTZ 12/2001, Jahrgang 62, Seite 1044ff).

Durch die DE 102 47 641 B3 ist ein Strukturbauteil bekannt, insbesondere in Form eines schalldämpfenden Abschirmteiles als Bauteil eines Kraftfahrzeuges. Um bei dem bekannten Strukturbauteil die Schalldämmung zu verbessern, besteht das dahingehende Abschirmteil aus einem Schirmkörper mit einem Basisrand als Strukturteil einer ersten Art, das randseitig über winkelförmige Bügelschenkel innerhalb des Motorraumes an dortigen feststehenden Teilen festlegbar ist und thermische Motorenkomponenten gegenüber wärmeempfindlichen Baukomponenten absch i rmt.

Der Schirmkörper als Strukturteil der ersten Art ist in einem Mittenbereich U-förmig gewölbt und ist im übrigen dahingehend symmetrisch aufgebaut. Der U-förmig gewölbte Mittenbereich geht randseitig in Randbereiche stärkerer Krümmung über, wobei an den beiden einander gegenüberliegenden Randbereichen die winkelförmigen Bügel als Festlegemittel nachträglich angebracht sind. Der Schirmkörper besteht aus zwei Metallblechlagen, zwischen denen sich eine schalldämmende und/oder wärmedämmende Dämmschicht erstreckt und zum Festlegen der Blechdecklagen aneinander dient eine Bördelung, bei der der freie Bördelrand der einen Decklage den Randbereich der anderen Decklage flächig umfaßt. Um Gewicht zu sparen, ist der Schirmkörper aus Aluminium oder aus einem sonstigen Leichtmetall aufgebaut.

Die bekannte Lösung dient vorzugsweise der Abschirmung einer Kupplung zwischen einem Getriebeflansch und einer Kardanwelle vor vom Getriebe kommenden Körperschall sowie einer dauerhaften Beeinflussung durch Temperaturstrahlung eines benachbart verlaufenden Abgasrohres. Bei Versuchen wurde eine Verringerung der Schallemission bei der bekannten Lösung um 3 dB erreicht. Um die dahingehende Abschirmwirkung zu erreichen, erstrecken sich längs des Mittenbereiches des ersten Strukturteils in Form des Schirmkörpers weitere Strukturteile einer zweiten Art, die sich in Form von sickenförmigen Längs- und Querrippen über die konvexe Außenseite des Schirmkörpers erstrecken. Charakteristisch an dieser bekannten Strukturierung ist, dass sich an Längsrippen, die sich über die gesamte Länge des Schirmkörpers erstrecken, einstückig angeformte Querrippen anschließen, die eine Art Noppenstruktur ausbilden und die in alternierender Reihenfolge benachbart in Zwischenabstände zwischen zwei jeweiligen Querrippen einer benachbarten Längsrippe eingreifen. Die nach außen hin stärker abgekrümmten Randbereiche mit den Anschlußbügeln sind hingegen von den genannten Rippen freigehalten. Im Hinblick auf die unterbrochene Querrippenstruktur der bekannten Lösung steht zu erwarten, dass insoweit die Steifigkeit und Festigkeit reduziert ist. Ferner ist an der Übergangsstelle zu den Anschlußbügeln eine Aussteifung des Schirmkörpers nur über die abgewinkelten Bügelschenkel erhalten, die insoweit die Anschlußgeometrie, hier des Strukturbauteils an feststehenden Motor- oder Chassiskomponenten, weitgehend definieren, was dergestalt die Einsatzmöglichkeiten des bekannten Strukturbauteils einschränkt. Auch benötigen die Anschlußbügel mit ihren gewinkelten Bügelschenkeln sowie den Augenanschlußstellen für den Durchgriff eines Befestigungsmittels (Schraube) zum einen Bauraum und zum anderen erhöhen sie das Gewicht für die bekannte Lösung.

Durch die CA-A1-2 405 334 ist ein gattungsgemäßes Strukturbauteil in Form eines Abschirmteils bekannt. Das bekannte Strukturbauteil ist zu einer Mittenlängsachse symmetrisch aufgebaut und das Strukturteil der ersten Art ist mit einer Krümmung versehen, die von der Gestalt her einem Pferdekopf ähnelt. Weitere Strukturteile einer zweiten, einer dritten sowie einer vierten Art sind vorhanden, die vergleichbar einem Koppelgeschirr das pferdekopfartige Strukturteil der ersten Art zumindest teilweise umfassen und dergestalt aussteifen. Die Strukturteile der zweiten Art, die sattelartig die Oberseite des Strukturteils der ersten Art übergreifen, weisen unterschiedlich große Abstände zueinander auf und münden über kreisrund verlaufende Anbindungsstellen in Form von Knoten beidseitig in jeweils ein Strukturteil einer vierten Art aus, die parallel zueinander verlaufend und einander gegenüberliegend im Bereich des stirnseitigen Endes des pferdekopfartigen ersten Strukturteils stufenfrei ineinander übergehen. Die freien Längsränder des ersten Strukturteils sind weiter von jeweils einem Strukturteil der dritten Art eingefaßt, in die zumindest teilweise die Strukturteile der zweiten Art ausmünden.

Durch die US-A-3 948 340 ist ein Strukturbauteil in Form eines Abschirmteils bekannt mit einem im Querschnitt gesehen wannenförmig ausgebildeten Strukturteil der ersten Art, aus dem quer zu seiner Mittenlängsachse verlaufend und in gleichen Abständen zueinander Strukturteile einer zweiten Art zur Aussteifung des Strukturteils der ersten Art einstückig ausgeprägt sind.

Ausgehend von diesem Stand der Technik stellt sich die Erfindung die Auf gabe, ein Strukturbauteil der genannten Art unter Beibehalten seiner Vorteile, nämlich eine sehr gute Schall- und Wärmeisolation sicherzustellen, dahingehend weiter zu verbessern, dass weniger Einbauraum benötigt wird und dass es universeller einsetzbar ist bei gleichzeitig erhöhter Steifigkeit sowie Festigkeit und reduziertem Gewicht mit vergleichbar niedrig anzusetzenden Herstellkosten. Eine dahingehende Aufgabe löst ein Strukturbauteil mit den Merkmalen des Patentanspruches 1 in seiner Gesamtheit.

Dadurch, dass gemäß dem kennzeichnenden Teil des Patentanspruches 1 das Strukturteil der vierten Art entlang einer Mittenlängsachse im Strukturteil der ersten Art nur einmal angeordnet ist, dass die Strukturteile der zweiten Art zumindest außerhalb der Verbindungsstellen entlang des Strukturteils der ersten Art durchgehend verlaufend angeordnet sind, und dass die jeweils unmittelbar benachbarten Strukturteile der zweiten Art einen gleichen Abstand zueinander aufweisen, der verschieden, insbesondere kleiner ist als der Abstand des Strukturteils der vierten Art zu denen der dritten Art, ist der Randbereich über ein weiteres Strukturteil verfestigt, das integrativer Bestandteil des Schirmkörpers ist und nicht, wie teilweise im Stand der Technik aufgezeigt, aus randseitig aufgesetzten Befestigungs-Bügelteilen zu bestehen braucht. Durch die Überführung der Strukturteile der zweiten Art in Richtung des jeweiligen Randbereiches mit dem dritten Strukturteil sind die vorzugsweise in der Art von sickenförmigen Versteifungsrippen ausgebildeten Strukturteile der genannten Art im Bereich der Krümmungsänderung zum Randbereich geführt und versteifen dergestalt die Randstruktur des Schirmkörpers in Form des ersten Strukturteils. Insoweit ist das Strukturbauteil in der Art einer Flachwanne ausbildbar und nimmt dergestalt wenig Einbauraum ein und benötigt wenig Gewicht. Eine Befestigung des Strukturbauteils an sonstigen Motorenbauteilkomponenten kann über an sich bekannte Festlegeklammern kostengünstig erfolgen. Im vorliegenden Fall wird jedoch für die dahingehende Festlegung eine Schweißverbindung gewählt. Alternativ hierzu können auch Schraubverbindungen zum Einsatz kommen. Mittels der verschiedenen Strukturteile läßt sich das Gesamtstrukturbauteil dergestalt aussteifen, dass eine Art Schirmpanzer realisiert ist, dessen Eigen-Schwingungsverhalten man als unkritisch bezeichnen kann, so dass die erfindungsgemäße Strukturbauteillösung insbesondere dort sinnvoll ihren Einsatz findet, wo im Betrieb mit einem hohen Aufkommen an Vibrationen zu rechnen ist. Neben den genannten Vorteilen bedingt die derart ausgesteifte Grundstruktur eine deutliche Reduzierung der Schallausbreitung lärmender Motorenkomponenten.

Durch den derart entstehenden Aufbau von vorzugsweise sickenförmigen Längs- und Querrippen über die genannten Strukturteile ist in allen Ausrichtungen des Abschirmteiles eine panzerartige Verfestigung und Versteifung realisiert. Der dahingehende Effekt läßt sich noch verstärken, indem man dafür Sorge trägt, dass die Strukturteile der zweiten Art in die Strukturteile der dritten und vierten Art einmünden. Dergestalt unterstützt dann ein Strukturteil der einen Art in "fließenden Übergängen" die Aussteifung über die Strukturteile der anderen weiteren Arten.

Weitere vorteilhafte Ausführungsformen des erfindungsgemäßen Strukturbauteils sind Gegenstand der sonstigen Unteransprüche.

Im folgenden wird das erfindungsgemäße Strukturbauteil anhand eines Ausführungsbeispiels nach der Zeichnung näher erläutert. Dabei zeigen in prinzipieller und nicht maßstäblicher Darstellung die
- Fig.1: eine Draufsicht auf das Strukturbauteil;
- Fig.2: eine Unteransicht auf das Strukturbauteil;
- Fig.3: eine Seitenansicht auf das Strukturbauteil;
- Fig.4: eine stirnseitige Ansicht auf das Strukturbauteil gemäß Pfeilrichtung X in Fig.1.

Die erfindungsgemäße Lösung betrifft ein Strukturbauteil, insbesondere Abschirmteil, für den Einsatz bei Kraftfahrzeugen mit von ihrer Flächenausdehnung und/oder ihrem Richtungsverlauf zumindest teilweise unterschiedlich ausgebildeten Strukturteilen verschiedener Art 10,12,14,16, von denen mindestens ein Strukturteil 10 einer ersten Art mit einer Krümmung 18 versehen ist, die in Richtung mindestens eines Randbereichs 20 zumindest teilweise zunimmt und mit Strukturteilen 12 einer zweiten Art, die zumindest teilweise der dahingehenden Krümmung 18 nachfolgen. In dem jeweiligen gekrümmten Randbereich 20 erstreckt sich ein Strukturteil 14 einer dritten Art, nach dessen Lage sich die Strukturteile 12 der zweiten Art ausrichten, die sich zumindest im Bereich der Krümmungsänderung 22 zum Randbereich 20 entlang des ersten Strukturteiles 10 durchgehend erstrekken.

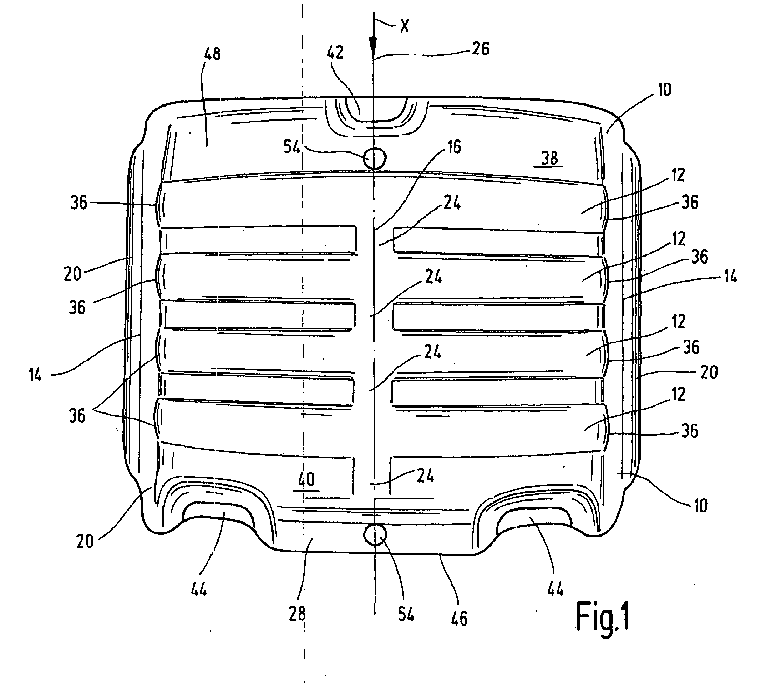

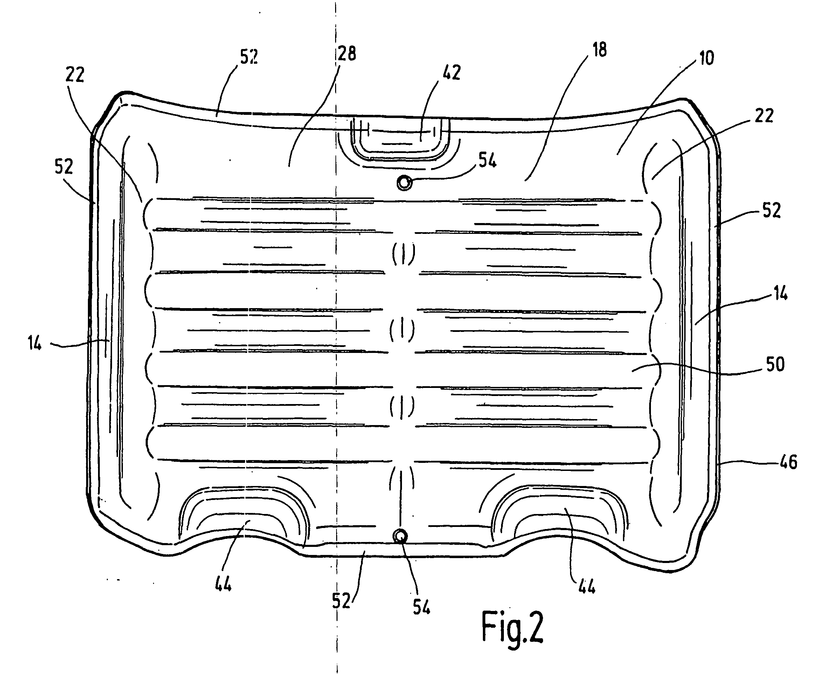

Wie sich insbesondere aus der Draufsicht nach der Fig.1 sowie aus der Unteransicht nach der Fig.2 ergibt, ist die in jeweiliger Draufsicht gesehene Flächenausdehnung des Strukturteils 10 erster Art größer als die eines jeweiligen Strukturteils 12 der zweiten Art, wobei die Flächenausdehnung eines Strukturteils 14 der dritten Art von der Flächenausdehnung des Strukturteils 12 der zweiten Art verschieden, insbesondere größer gewählt ist. Ferner stellt ein Strukturteil 16 der vierten Art eine Verbindung zwischen den Strukturteilen 12 der zweiten Art her, wobei die Strukturteile 12 der zweiten Art außerhalb der Verbindungsstellen 24 entlang des Strukturteils 10 der ersten Art durchgehend verlaufend angeordnet sind (s. Fig.1). Des weiteren ist das Strukturteil 16 der vierten Art von seiner Flächenausdehnung her kleiner gewählt als die Flächenausdehnung eines Strukturteils 12 der zweiten Art.

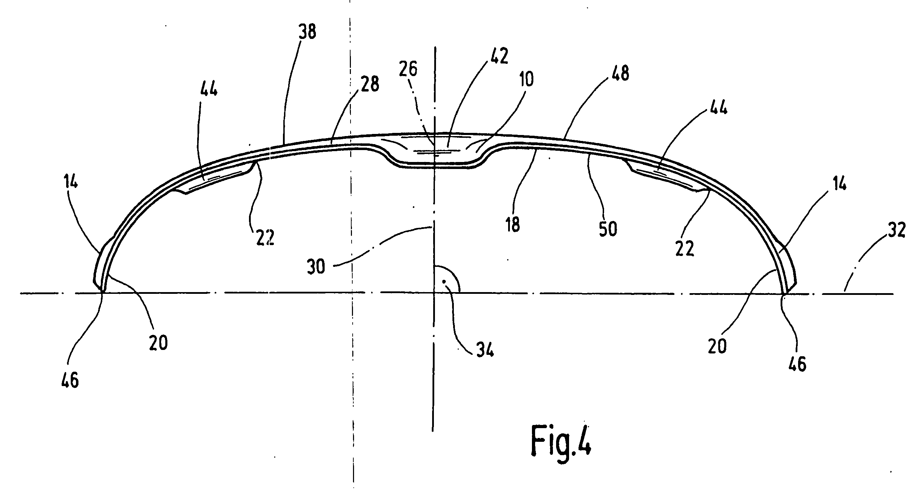

Wie sich insbesondere aus der Querschnittsform nach der Fig.4 ergibt, weist das Strukturteil 10 der ersten Art im wesentlichen einen symmetrischen Aufbau in Längs- und in Querrichtung auf mit den beiden in der Querrichtung gegenüberliegenden Randbereichen 20 stärkerer Krümmung zwischen denen sich ein Mittenbereich 28 schwächerer Krümmung erstreckt. Der eigentliche symmetrische Aufbau ergibt sich zu einer Ebene 30, die durch die Mittenlängsachse 26 hindurchgeht und die mit einer fiktiven Sehne 32 eines durch den Querschnitt des Strukturteils 10 der ersten Art gebildeten Bogens einen rechten Winkel 34 einschließt.

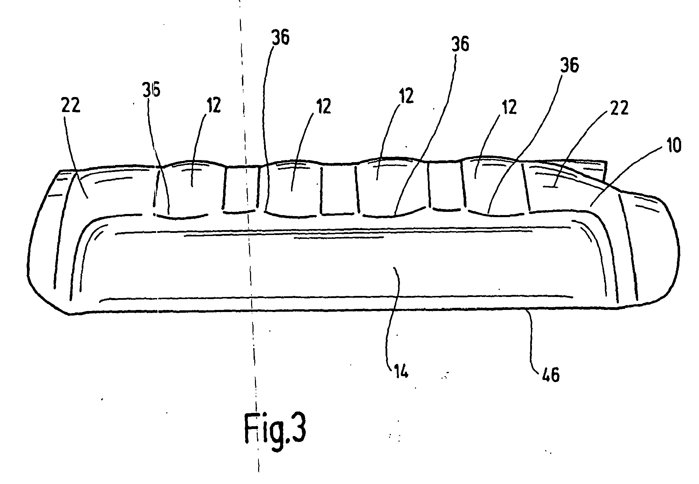

Wie sich des weiteren aus den Fig.1 und 2 ergibt, weisen die jeweils unmittelbar benachbarten Strukturteile 12 der zweiten Art einen gleichen Abstand zueinander auf, der kleiner ist als der Abstand des Strukturteils 16 der vierten Art zu denen der dritten Art 14. Die Strukturteile 12 der zweiten Art sind parallel zueinander verlaufend in Querrichtung des Strukturteils 10 der ersten Art angeordnet und mit ihren jeweils freien, einander gegenüberliegenden Enden 36 münden diese in die Strukturteile 14 der dritten Art ein. Letzteres ergibt sich insbesondere aus der einen Seitendarstellung nach der Fig.3. An der Stelle der Einmündung sind die jeweiligen Enden 36 konvex geformt und an der Stelle des Überganges ist das Strukturteil 14 der dritten Art mit entsprechenden konkaven Vertiefungen ausgestattet.

In Blickrichtung auf die Fig.1 gesehen nach oben und unten hin geht in Längsrichtung des Strukturteils 10 der ersten Art das zuoberst und zuunterst jeweils angeordnete Strukturteil 12 in eine ebene Übergangsfläche 38,40 über. Entlang der Mittenlängsachse 26 ist im oberen Bereich des Strukturteils 10 eine Mitteneinprägung 42 vorhanden und im unteren Bereich an der Übergangsfläche 40 sind außermittig zwei Außenprägungen 44 vorhanden. Die genannten Prägungen 42,44 können dem Eingriff von nicht näher dargestellten Befestigungsklammern dienen, die auf dem Gebiet der Hitzeschilder üblich sind und die für das Befestigen des Strukturbauteils an sonstigen Motorenkomponenten und/oder Chassisteilen vorgesehen sind. Über die genannten Prägungen 42,44 läßt sich dergestalt aber auch eine Festlegung über eine Schweiß- oder Schraubverbindung erhalten. Das Strukturteil 16 der vierten Art ist gemäß der Darstellung nach den Fig.1 und 2 entlang der Mittenlängsachse 26 im Strukturteil 10 der ersten Art nur einmal angeordnet. Des weiteren beginnt das gezeigte Strukturteil 16 der vierten Art in Blickrichtung auf die Fig.1 gesehen an dem Strukturteil 12 der zweiten Art, welches zuoberst angeordnet ist und ist an seinem unteren Ende in Richtung der Übergangsfläche 40 auf dieser vorstehend und die Fläche 40 überdeckend weitergeführt.

Wie sich insgesamt aus den Darstellungen ergibt, sind die Strukturteile der dritten und vierten Art 14,16 in Längsrichtung des Strukturteils 10 der ersten Art geradlinig sich erstreckend angeordnet, wobei die Strukturteile 14 der dritten Art in Längsrichtung nach außen hin teilweise den freien Rand 46 des Strukturteils 10 der ersten Art begrenzen. Die Strukturteile 12 der zweiten Art erstrecken sich entlang der Krümmungsänderung 22 im Strukturteil 10 der ersten Art erstrecken, um dergestalt in den abgegrenzten Randbereichen 20 eine erhöhte Steifigkeit und Festigkeit sicherzustellen.

Das jeweilige Strukturteil 10,12,14,16 ist mehrlagig aufgebaut, insbesondere aus zwei Blechdecklagen 48 (Fig.1) und 50 (Fig.2). Zwischen den beiden Blechdecklagen 48,50 soll sich eine nicht näher dargestellte schall- und/oder wärmedämmende Zwischenlage erstrecken. Wie dahingehende Zwischenlagen auszugestalten sind, ergibt sich im Stand der Technik, beispielsweise nach der DE 41 37 706 C2, DE 102 53 508 B3, DE 42 11 409 A1 etc.. Um einen erhöhten Korrosionsschutz sicherzustellen, sind die genannten Decklagen 48,50 vorzugsweise aus einem Edelstahlmaterial gebildet. Ferner ist das Strukturbauteil in der Art eines Umformteils ausgestaltet, wobei einstückig miteinander verbundene Strukturteile 12,14,16, beginnend mit der zweiten Art 12, sickenförmige Längs- und Querrippen ausbilden, die einstückiger Bestandteil des Strukturteils 10 der ersten Art sind. Die dergestalt senkrecht aufeinanderstehenden Längs- und Querrippen verschiedener Art erlauben einen panzerartigen Aufbau des Strukturteils 10 der ersten Art und mithin einen Schirmkörper, der besonders vibrationsresistent ist. Die beiden Blechdecklagen 48,50 werden in üblicher und daher nicht näher dargestellter Weise über eine Verbördelung 52 unter Einbehalt der nicht näher dargestellten Zwischenlage fest miteinander verbunden. Die dahingehende Verbördelung 52 umfaßt das Strukturbauteil umfangsseitig entlang seines unteren freien Randes 46. Ferner liegt es noch im Bereich der Erfindung, anstelle der sikkenförmigen Einprägungen für die Längs- und Querrippen die in Rede stehenden Strukturteile 12,14,16 beispielsweise mittels eines Schweißverfahrens od. dgl. auf das Strukturteil 10 der ersten Art aufzusetzen und nicht die dahingehenden Strukturteile, wie beschrieben, tiefzuziehen oder auszuformen, auszuprägen oder einzusicken.

Mit der erfindungsgemäßen Lösung ist für bestimmte Anwendungsfälle und Anwendungsgebiete ein Optimum an geringem Gewicht, geringen Herstellkosten, Vibrationsarmut, hoher Steifigkeit und Festigkeit bei gleichzeitig sehr gutem Wärme- und Schallisolationsverhalten erreicht. Darüber hinaus weist das Strukturbauteil ein formschönes Ausehen auf. Die Verbindung der Blechlagen miteinander kann noch über Nietverbindungen 54 mit unterstützt sein. Für bestimmte Anwendungsfälle genügt es auch, das Strukturbauteil nur einlagig oder zweilagig auszubilden.

Die Strukturbauteile der weiteren Art, beginnend mit der zweiten Art 12, weisen insgesamt einen vorstehenden ausgeprägten Bereich auf, der größer ist als der nicht ausgeprägte vorstehende Bereich des Strukturbauteils der ersten Art 10. Des weiteren erstrecken sich die Strukturteile 14 der dritten Art entlang des jeweiligen Randbereichs 20 des Strukturteils 10 der ersten Art und weisen zu ihren beiden freien Endseiten hin einen axialen Überstand auf gegenüber dem Einlaufbereich der Strukturteile 12 der zweiten Art. Ferner ist für die Strukturteile 12 der zweiten Art ein alternierendes Muster denkbar, bei dem ausgehend von der Mittenlängsachse 26 des Strukturteils 10 sich immer abwechselnd ein Strukturteil 12 in der einen oder anderen Querrichtung erstreckt, die zum Strukturbauteil 16 der vierten Art abgewandt ist. Ferner sitzen gemäß der Darstellung nach der Fig.1 die Strukturteile 12,14 und 16 auf der konvexen Oberseite des Strukturteils 10 und bilden dergestalt den beschriebenen topographischen Überstand. Des weiteren kann vorgesehen sein, anstelle eines äußeren topographischen Überstandes die Strukturteile 12,14 und 16 auf der Innenseite des Strukturteils 10 anzuordnen oder sowohl innen als auch außen.

## Patentansprüche

1. Strukturbauteil in Form eines Abschirmteils zur Schall- und/oder Wärmeisolation von Motorenkomponenten, mit von ihrer Flächenausdehnung und/oder ihrem Richtungsverlauf zumindest teilweise unterschiedlich ausgebildeten Strukturteilen (10,12,14,16), von denen mindestens ein Strukturteil (10) einer ersten Art mit einer Krümmung (18) versehen ist, die in Richtung mindestens eines Randbereiches (20) des Strukturbauteils zumindest teilweise zunimmt, und mit Strukturteilen (12) einer zweiten Art, die zumindest teilweise der dahingehenden Krümmung (18) nachfolgen, wobei
• in dem jeweiligen gekrümmten Randbereich (20) mindestens ein Strukturteil (14) einer dritten Art angeordnet ist, nach dessen Lage sich die Strukturteile (12) der zweiten Art ausrichten, die sich zumindest im Bereich der Krümmungsänderung (22) zum Randbereich (20) entlang des ersten Strukturteils (10) durchgehend erstrecken,
• das Strukturteil (10) der ersten Art im wesentlichen einen symmetrischen Aufbau in einer Längs- und einer Querrichtung hat mit zwei in der Querrichtung gegenüberliegenden Randbereichen (20) stärkerer Krümmung, zwischen denen sich ein Mittenbereich (28) schwächerer Krümmung erstreckt,
• der symmetrische Aufbau sich ferner zu einer Ebene (30) ergibt, die mit einer fiktiven Sehne (32) eines durch den Querschnitt des Strukturteils (10) der ersten Art gebildeten Bogens einen rechten Winkel (34) einschließt, und
• ein Strukturteil (16) der vierten Art eine Verbindung zwischen den Strukturteilen (12) der zweiten Art herstellt
**dadurch gekennzeichnet, dass**
• das Strukturteil (16) der vierten Art entlang einer Mittenlängsachse (26) im Strukturteil (10) der ersten Art nur einmal angeordnet ist,
• die Strukturteile (12) der zweiten Art zumindest außerhalb der Verbindungsstellen (24) entlang des Strukturteils (10) der ersten Art durchgehend verlaufend angeordnet sind, und
• die jeweils unmittelbar benachbarten Strukturteile (12) der zweiten Art einen gleichen Abstand zueinander aufweisen, der verschieden, insbesondere kleiner ist als der Abstand des Strukturteils (16) der vierten Art zu denen der dritten Art (14).

2. Strukturbauteil nach Anspruch 1, **dadurch gekennzeichnet, dass** die Flächenausdehnung des Strukturteils (10) erster Art unterschiedlich, insbesondere größer ist als die eines Strukturteils (12) der zweiten Art und dass die Flächenausdehnung eines Strukturteils (14) der dritten Art von der Flächenausdehnung des Strukturteils (12) der zweiten Ar verschieden, insbesondere größer ist.

3. Strukturbauteil nach Anspruch 2, **dadurch gekennzeichnet, dass** das jeweilige Strukturteil (16) der vierten Art von seiner Fiächenausdehnung her kleiner oder gleich der Flächenausdehnung eines Strukturteils (12) der zweiten Art gewählt ist.

4. Strukturbauteil nach einem der Ansprüche 1 bis 3, **dadurch gekennzeichnet, dass** die Strukturteile (12) der zweiten Art parallel zueinander verlaufend in Querrichtung des Strukturteils (10) der ersten Art angeordnet sind und mit ihren jeweils freien, einander gegenüberliegenden Enden (36) in die Strukturteile (14) der dritten Art einmünden.

5. Strukturbauteil nach einem der Ansprüche 1 bis 4, **dadurch gekennzeichnet, dass** die Strukturteile der dritten (14) und vierten Art (16) sich in Längsrichtung des Strukturteils (10) der ersten Art geradlinig erstrekken und dass die Strukturteile (14) der dritten Art zumindest teilweise den freien Rand (46) des Strukturteils (10) der ersten Art mit begrenzen.

6. Strukturbauteil nach einem der Ansprüche 1 bis 5, **dadurch gekennzeichnet, dass** das jeweilige Strukturteil (10,12,14,16) mehrlagig aufgebaut ist, insbesondere aus zwei Blechdecklagen (48,50), vorzugsweise aus Edelstahlmaterial besteht, zwischen denen sich eine schall- und/oder wärmedämmende Zwischenlage erstreckt.

7. Strukturbauteil nach einem der Ansprüche 1 bis 6, **dadurch gekennzeichnet, dass** es in der Art eines Umformteils ausgestaltet ist und dass einstückig miteinander verbundene Strukturteile (12,14,16), beginnend mit der zweiten Art (12) sickenförmige Längs- und Querrippen ausbilden, die einstückiger Bestandteil des Strukturteils (10) der ersten Art sind.

## Claims

1. Structure component in the form of a shielding part for sound and/or heat insulation of engine components, with structure components (10, 12, 14, 16), the spatial expansion and/or direction of extension of which are different at least in part, of which at least one structure component (10) of a first type is equipped with an arc (18), the same increasing at least in part in the direction of at least one edge area (20) of the structure component, and with structure components (12) of a second type, which follow the said arc (18) at least in part, whereby
• at least one structure component (14) of a third type is located in the relevant arced edge area (20), the position of which the structure components (12) of the second type are aligned with, which extend continuously along the structure component (10) at least in the area of the arc change (22) towards the edge area (20),
• the structure component (10) of the first type is of a substantially symmetrical construction and extends in a longitudinal and a transverse direction with two edge areas (20) with a more pronounced arcing located opposite each other in a transverse direction, between which a central area (28) with a less pronounced arcing extends,
• the symmetrical construction further results in a level (30) that encloses a right angle (34) with a fictitious sinew (32) of an arc formed by the cross-section of the structure component (10) of the first type, and
• a structure component (16) of the fourth type creates a connection between the structure components (12) of the second type,
**characterised in that**
• the structure component (16) of the fourth type is located along a central longitudinal axis (26) within the structure component (10) of the first type only once,
• the structure components (12) of the second type continuously extend along the structure component (10) of the first type at least outside of the connection points (24), and
• the relevant directly adjacent structure components (12) of the second type are located at equal distances from each other, the same being different from, in particular smaller than the distance between the structure component (16) of the fourth type and those (14) of the third type.

2. Structure component according to Claim 1, **characterised in that** the spatial expansion of the structure component (10) of the first type is different, in particular larger than that of a structure component (12) of the second type, and **in that** the spatial expansion of a structure component (14) of the third type is different from, in particular larger than the spatial expansion of the structure component (12) of the second type.

3. Structure component according to Claim 2, **characterised in that** the spatial expansion of the relevant structure component (16) of the fourth type is smaller than, or equal to the spatial expansion of a structure component (12) of the second type.

4. Structure component according to one of the Claims 1 to 3, **characterised in that** the structure components (12) of the second type extend parallel to each other in a transverse direction of the structure component (10) of the first type and open out into the structure components (14) of the third type with their relevant free opposite ends (36).

5. Structure component according to one of the Claims 1 to 4, **characterised in that** the structure components of the third (14) and the fourth (16) type extend in a straight line in longitudinal direction of the structure component (10) of the first type, and **in that** the structure components (14) of the third type delimit the free edge (46) of the structure component (10) of the first type at least in part.

6. Structure component according to one of the Claims 1 to 5, **characterised in that** the relevant structure component (10, 12, 14, 16) is constructed from several layers, in particular from two sheet metal layers (48, 50), preferably made from stainless steel material, between which a sound and/or heat insulating interim layer extends.

7. Structure component according to one of the Claims 1 to 6, **characterised in that** the same is designed in the way of a deformed part, and **in that** structure components (12, 14, 16) connected with each other to form a single component, beginning with the second type (12), form bead-shaped longitudinal and transverse ribs forming a single piece part of the structure component (10) of the first type.

## Revendications

1. Composant structurel sous forme de pièces de protection pour l'isolation acoustique et/ou thermique de composants de moteur, ayant des pièces structurelles (10, 12, 14, 16) constituées différemment, au moins partiellement, quant à leur étendue superficielle et/ou à leur orientation, dont au moins une pièce structurelle (10) d'un premier type est munie d'une courbure (18) qui augmente au moins partiellement dans la direction d'au moins une zone marginale (20) du composant structurel, et ayant des pièces structurelles (12) d'un deuxième type qui suivent au moins partiellement la courbure (18) en ce sens,
. au moins une pièce structurelle (14) d'un troisième type est disposée dans la zone marginale (20) courbe respective, et sur la position de cette pièce (14) les pièces structurelles (12) du deuxième type s'alignent et s'étendent en continu, au moins dans la zone depuis la variation de courbure (22) vers la zone marginale (20), le long de la première pièce structurelle (10),
. la pièce structurelle (10) du premier type a essentiellement une construction symétrique dans une direction longitudinale et dans une direction transversale, avec deux zones marginales (20), opposées dans la direction transversale, de plus forte courbure, entre lesquelles une zone médiane (28) de plus faible courbure s'étend,
. la construction symétrique donne en outre un plan qui, avec une corde fictive (32) d'un arc formé par la section transversale de la pièce structurelle (10) du premier type, fait un angle droit (34), et
. une pièce structurelle (16) d'un quatrième type ménage une liaison entre les pièces structurelles (12) du deuxième type,
**caractérisé en ce que**
. la pièce structurelle (16) du quatrième type est disposée une seulement une fois le long d'un axe longitudinal médian (26) dans la pièce structurelle (10) du premier type,
. les pièces structurelles (12) du deuxième type sont disposées de façon continue, au moins à l'extérieur des emplacements de liaison (24), le long de la pièce structurelle (10) du premier type, et
. les pièces structurelles (12) du deuxième type, respectivement directement voisines, présentent entre elles un intervalle égal qui est différent, en étant en particulier plus petit, de l'intervalle de la pièce structurelle (16) du quatrième type à celles du troisième type (14).

2. Composant structurel selon la revendication 1, **caractérisé en ce que** l'étendue superficielle de la pièce structurelle (10) du premier type est différente, en étant en particulier plus grande, de celle d'une pièce structurelle (12) de deuxième type, et **en ce que** l'étendue superficielle d'une pièce structurelle (14) du troisième type est différente de l'étendue superficielle de la pièce structurelle (12) de deuxième type, en particulier elle est plus grande.

3. Composant structurel selon la revendication 2, **caractérisé en ce que** la pièce structurelle (16) respective du quatrième type est choisie, quant à son étendue superficielle, plus petite ou égale à l'étendue superficielle d'une pièce structurelle (12) de deuxième type.

4. Composant structurel selon une des revendications 1 à 3, **caractérisé en ce que** les pièces structurelles (12) du deuxième type sont disposées parallèlement entre elles dans la direction transversale de la pièce structurelle (10) du premier type, et débouchent, par leurs extrémités (36) respectivement libres, opposées les unes par rapport aux autres, dans les pièces structurelles (14) du troisième type.

5. Composant structurel selon une des revendications 1 à 4, **caractérisé en ce que** les pièces structurelles du troisième type (14) et du quatrième type (16) s'étendent de façon rectiligne dans la direction longitudinale de la pièce structurelle (10) du premier type, et **en ce que** les pièces structurelles (14) du troisième type délimitent, au moins partiellement, le bord libre (46) de la pièce structurelle (10) du premier type.

6. Composant structurel selon une des revendications 1 à 5, **caractérisé en ce que** la pièce structurelle respective (10, 12, 14, 16) est constituée en plusieurs couches, en particulier en deux couches de couverture en tôle (48, 50), de préférence en matériau d'acier fin, entre lesquelles s'étend une couche intermédiaire d'isolation acoustique et/ou thermique.

7. Composant structurel selon une des revendications 1 à 6, **caractérisé en ce qu'**il est constitué sous forme de pièce de formage, et **en ce que** des pièces structurelles (12, 14, 16) reliées entre elles d'une seule pièce, en commençant avec le deuxième type (12), constituent des nervures longitudinales et transversales en forme de moulure, qui font partie intégrante, d'une seule pièce, de la pièce structurelle (10) du premier type.
